# DEMANDE DE BREVET EUROPEEN

(11) **EP 4 321 408 A1**
(43) Date de publication de la demande: **14.02.2024**
(21) Numéro de dépôt: 23190453.3
(22) Date de dépôt: 09.08.2023
(51) Int. Cl.: B61D 27/00, B60H 1/00, B60H 1/24

(54) **VÉHICULE DE TRANSPORT DE PASSAGERS**

(30) Priorité: 12.08.2022 FR 2208281
(71) Demandeur: ALSTOM Holdings, 93400 Saint-Ouen-sur-Seine (FR)
(72) Inventeur: KELLEY, Benjamin, 93482 Saint Ouen (FR)
(74) Mandataire: Lavoix

(57) **Abrégé**

Cette invention concerne un véhicule (10) de transport de passagers comprenant :
- un système d'aération et de ventilation (12) adapté à générer un flux d'air (F) ;
- deux rangées de sièges, chaque rangée s'étendant selon une direction principale ; et
- un dispositif de création d'une barrière d'air (16) afin de limiter la propagation de contaminant entre les passagers du véhicule (10).

Le dispositif de création d'une barrière d'air (16) comprend au moins deux buses d'air (28), chaque buse d'air (28) étant adaptée pour projeter une partie du flux d'air (F) en un jet d'air orienté (30) selon un sens de sortie (32) de ladite buse d'air (28.

Les jets d'air orientés (30) forment ensemble une barrière d'air (34) s'étendant entre les deux rangées de sièges, et les sens de sortie des buses d'air s'étendent chacun parallèlement à la direction principale.

## Description

La présente invention concerne un véhicule de transport de passagers, notamment un véhicule ferroviaire, comprenant
- un système d'aération et de ventilation adapté à générer un flux d'air ;
- deux rangées de sièges, chaque rangée s'étendant selon une direction principale ; et
- un dispositif de création d'une barrière d'air afin de limiter la propagation de contaminant entre les passagers du véhicule.

Dans les véhicules de transport de passagers, la proximité entre les passagers favorise la propagation par voie aérienne de contaminants, notamment de diamètre aérodynamique inférieur à 10µm, tel que des virus ou des particules fines.

Il est nécessaire, notamment en période de pandémie ou de forte pollution, de protéger les passagers et de limiter la propagation par voie aérienne de contaminants.

Dans les véhicules de transport de passagers, il est connu d'installer un système de ventilation et d'aération équipé d'un filtre mécanique ou chimique, de sorte à filtrer et renouveler l'air circulant dans chaque voiture.

Cependant, de tels systèmes sont généralement insuffisants pour limiter la propagation d'un virus par voie aérienne à l'intérieur du véhicule.

En effet, généralement, la diffusion longitudinale de l'air dans le véhicule par de tels systèmes favorise une propagation longitudinale du contaminant exposant plusieurs rangées de passagers en cas d'émission dudit contaminant par une source ponctuelle à l'intérieur du véhicule.

Pour pallier cette insuffisance, il est connu d'installer des systèmes de ventilation actifs individuels pour chaque passager, comprenant par exemple un ventilateur et un filtre. Un tel système est par exemple décrit dans le document WO 2020/137465 A1.

Cependant, une telle solution est couteuse et énergivore.

Un but de l'invention est de proposer un dispositif apte à limiter de la propagation de contaminant dans un véhicule de transport de passagers, tout en restant économique et peu consommateur d'énergie.

A cet effet, l'invention a pour objet le véhicule de transport de passagers précité, caractérisé en ce que le dispositif de création d'une barrière d'air comprend au moins deux buses d'air, chaque buse d'air étant adaptée pour projeter une partie du flux d'air généré par le système d'aération et de ventilation en un jet d'air orienté selon un sens de sortie de ladite buse d'air, les sens de sortie des buses d'air étant différents les uns des autres. Les jets d'air orientés forment ensemble une barrière d'air s'étendant entre les deux rangées de sièges, et les sens de sortie des buses d'air s'étendent chacun parallèlement à la direction principale.

Le véhicule selon l'invention peut comprendre l'une ou plusieurs des caractéristiques suivantes, prise(s) isolément ou suivant toute combinaison techniquement possible :
- Le véhicule comprend deux rangées transversales de sièges agencées l'une derrière l'autre selon un sens longitudinal du véhicule, les jets d'air orientés formant ensemble une barrière d'air s'étendant entre les deux rangées de sièges, les sens de sortie des buses d'air s'étendent chacun perpendiculairement au sens longitudinal du véhicule.
- Le sens de sortie de chaque buse d'air a une composante orientée vers le haut du véhicule et/ou le sens de sortie de l'une des buses d'air est dirigé horizontalement.
- Le dispositif de création d'une barrière d'air comprend plus que deux buses d'air, en particulier quatre buses d'air, et dans lequel chaque angle entre les sens de sortie d'une buse d'air et d'une buse d'air adjacente est identique.
- Le véhicule comprend une grille de sortie, la grille de sortie et le dispositif de création d'une barrière d'air formant un ensemble de limitation de la propagation de contaminant, la grille de sortie étant adaptée à être traversée par au moins une partie du flux d'air et le dispositif de création d'une barrière d'air étant adapté à projeter une partie du flux d'air.
- L'ensemble de limitation de la propagation de contaminant comprend un dispositif de blocage d'air qui est disposé en amont des buses d'air et de la grille de sortie, le dispositif de blocage d'air étant destiné à réduire l'au moins une partie du flux d'air destiné à traverser la grille de sortie et à augmenter l'au moins une partie du flux d'air destiné à être projeté par le dispositif de création d'une barrière d'air.
- Les buses d'air sont agencées à distance de la grille de sortie selon le sens longitudinal du véhicule.
- Les buses d'air sont montées sur la grille de sortie.
- Les buses d'air sont montées mobiles en translation sur la grille de sortie parallèlement au sens longitudinal du véhicule.
- Le véhicule comprend une paroi latérale s'étendant selon le sens longitudinal du véhicule et sur laquelle est agencée une grille d'évacuation du système d'aération et de ventilation, l'ensemble de limitation de la propagation de contaminant étant fixé sur la grille d'évacuation.
- Les angles entre le sens de sortie des buses d'air et un plan horizontal de référence du véhicule sont égaux à 0°, 20°, 40° et/ou 60°.

L'invention sera mieux comprise à la lecture de la description qui va suivre, donnée uniquement à titre d'exemple, et faite en se référant aux dessins annexés, sur lesquels :
- [Fig 1] la figure 1 est une vue schématique en perspective de l'intérieur d'un véhicule selon l'invention comprenant un ensemble de limitation de la propagation de contaminant ; et
- [Fig 2] la figure 2 est une vue schématique en perspective de l'ensemble de limitation de la propagation de contaminant de la figure 1.

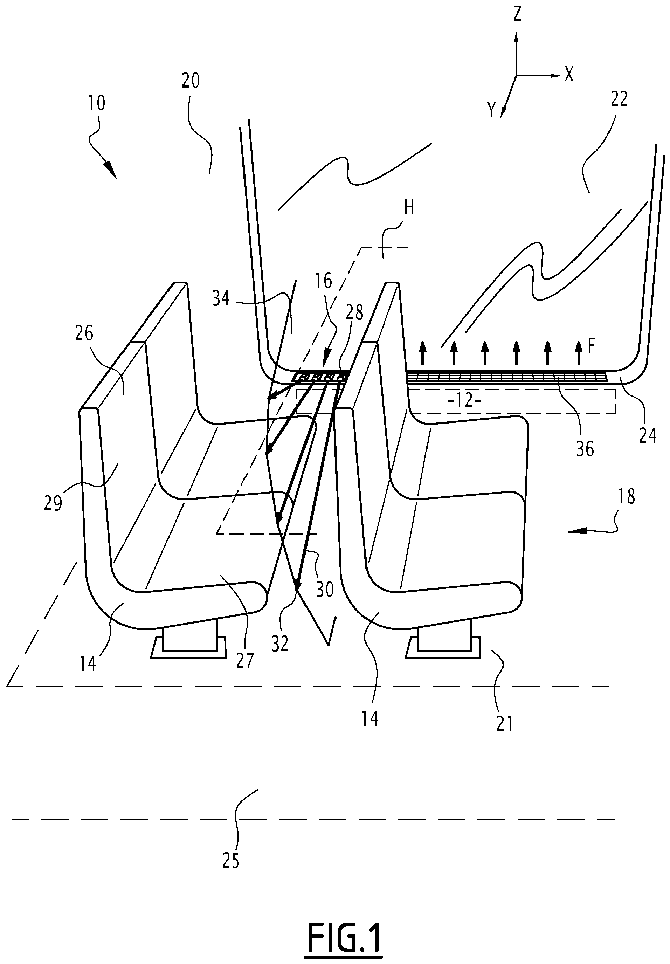

La figure 1 illustre l'intérieur d'un véhicule 10 de transport de passagers comprenant un système d'aération et de ventilation 12, au moins deux rangées, notamment au moins deux rangées transversales, 14 de sièges et un dispositif de création d'une barrière d'air 16 afin de limiter la propagation de contaminant entre les passagers du véhicule 10.

Le véhicule 10 est un véhicule destiné au transport de passagers, notamment au transport de passagers sur des moyennes et longues distances, permettant un temps de trajet sans l'ouverture de porte d'accès extérieure d'au moins 15 min, comme du transport extra-urbain par exemple.

Le véhicule 10 est par exemple un véhicule ferroviaire tel qu'un train. En variante, le véhicule 10 est un bus, un bateau ou un avion.

Le véhicule 10 comprend un habitacle 18 délimité par deux parois latérales 20 (dont une est visible sur la Figure 1) s'étendant selon un sens longitudinal X du véhicule et un plancher 21 perpendiculaire aux parois latérales 20.

Le sens longitudinal X s'étend selon le sens d'avancée du véhicule 10 en fonctionnement normal et définit un avant et un arrière du véhicule 10.

Le sens d'élévation Z s'étend depuis le plancher 21 perpendiculairement à celui-ci et orthogonalement au sens longitudinal X du véhicule et définit un haut et un bas du véhicule. Le sens d'élévation Z s'étend du bas vers le haut du véhicule 10.

Le sens transversal Y est orthogonal au sens longitudinal X et au sens d'élévation Z et définit une gauche et une droite du véhicule. Le sens transversal Y s'étend par exemple de la gauche vers la droite du véhicule 10.

Chaque paroi latérale 20 comprend avantageusement au moins une fenêtre 22, et de préférence une pluralité de fenêtres 22 alignées à distance les unes des autres selon le sens longitudinal X du véhicule.

Chaque fenêtre 22 est par exemple ménagée dans une des parois latérales 20 du véhicule 10 et définit un rebord de fenêtre 24 s'étendant par exemple perpendiculairement à la paroi latérale 20 et situé à une limité inférieure de la fenêtre 22.

Le rebord de fenêtre 24 définit une surface libre avec une normale s'étendant vers le haut du véhicule 10 selon le sens d'élévation Z du véhicule 10.

Comme illustré sur la figure 1, le véhicule 10, par exemple le rebord de fenêtre 24 ou le plancher 21, définit un plan horizontal de référence H du véhicule 10 s'étendant parallèlement au sens longitudinal X et au sens transversal Y du véhicule.

Plus particulièrement, le rebord de fenêtre 24 est parallèle au plan horizontal de référence H ou est légèrement incliné par rapport à celui-ci, par exemple d'un angle inférieur à 10°.

Chaque rangée transversale 14 de sièges est par exemple constituée de deux sièges 26 adjacents. Chaque siège 26 comprend une assise 27 et un dossier 29.

Chaque rangée transversale 14 s'étend selon une direction principale, ici parallèle au sens transversal Y du véhicule 10.

Comme illustré sur la figure 1, les rangées transversales 14 de sièges sont agencées les unes derrière les autres selon le sens longitudinal X du véhicule 10, et plus particulièrement le long d'une des parois latérales 20 du véhicule 10.

Le véhicule 10 comprend par exemple, le long de chaque paroi latérale 20 du véhicule 10, une pluralité de rangées transversales 14 de sièges agencées les unes derrière les autres selon le sens longitudinal X du véhicule 10, formant ainsi deux rangées longitudinales de sièges séparées par un couloir de circulation 25.

Avantageusement, chaque rangée transversale 14 de sièges est disposée à proximité de l'une des fenêtres 22 de la paroi latérale 20 correspondante.

Plus particulièrement, comme illustré sur la figure 1, deux rangées transversales 14 de sièges peuvent être agencées en regard d'une même fenêtre 22.

Les sièges 26 de deux rangées transversales 14 de sièges agencées l'une derrière l'autre sont, par exemple, orientés dans le même sens, par exemple vers l'avant du véhicule 10 comme illustré sur la figure 1.

En variante, les sièges 26 de deux rangées transversales 14 de sièges agencées l'une derrière l'autre sont orientés dans un sens opposé, c'est-à-dire les sièges 26 d'une des rangées transversales 14 sont orientés vers l'avant et les sièges 26 de l'autre des rangées transversales 14 sont orientés vers l'arrière, formant ainsi un agencement en « carré ».

Le système d'aération et de ventilation 12 du véhicule 10 est adapté pour générer un flux d'air F.

A cet effet, le système d'aération et de ventilation 12 du véhicule 10 est conçu pour aspirer l'air intérieur présent dans l'habitacle 18, filtrer celui-ci et avantageusement le mélanger avec de l'air provenant de l'extérieur, puis le réchauffer ou le refroidir selon la température ambiante, générant ainsi le flux d'air F prêt à être évacué par soufflage dans l'habitacle 18.

Le flux d'air F est par exemple généré par le système d'aération et de ventilation 12 avec une vitesse de soufflage généralement inférieure à 5 m/s.

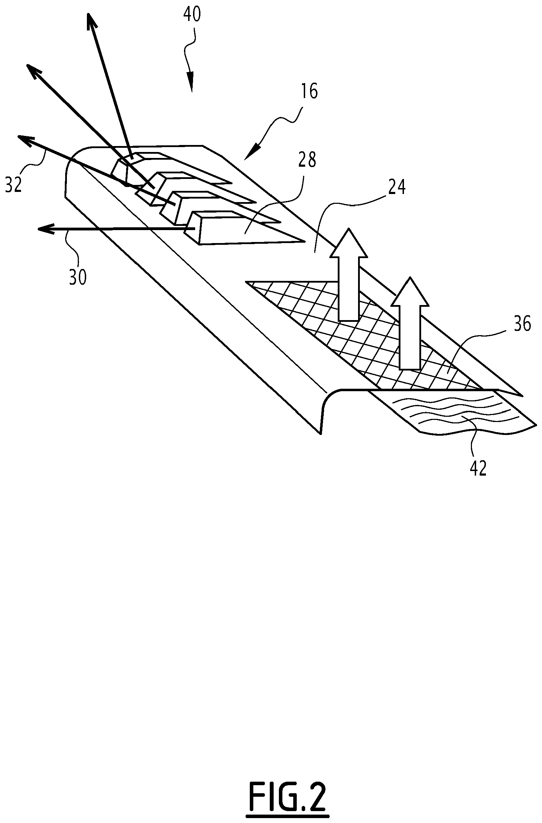

Le dispositif de création d'une barrière d'air 16 comprend au moins deux buses d'air 28, de préférence plus que deux buses d'air 28, et avantageusement quatre buses d'air 28 comme illustré sur les figures 1 et 2.

De préférence, comme illustré sur la figure 1, les buses d'air 28 sont disposées sur l'un des rebords de fenêtre 24.

Chaque buse d'air 28 est adaptée pour projeter une partie du flux d'air F généré par le système d'aération et de ventilation 12 en un jet d'air 30 orienté selon un sens de sortie 32 de ladite buse d'air 28.

Chaque jet d'air 30 orienté est projeté par une des buses d'air 28 par exemple avec une vitesse comprise entre 5 m/s et 15 m/s.

Les jets d'air 30 orientés forment ensemble une barrière d'air 34 s'étendant entre deux rangées transversales 14 de sièges, et notamment entre deux rangées transversales 14 de sièges directement agencées l'une derrière l'autre. Plus particulièrement, la barrière d'air 34 s'étend entre les deux rangées transversales 14 de sièges à proximité du rebord de fenêtre 24 sur lequel sont disposées les buses d'air 28.

A cet effet, les buses d'air 28 sont disposées, dans le sens longitudinal X, entre les deux rangées transversales 14 de sièges correspondantes pour créer la barrière d'air 34 entre les sièges 26 des deux rangées transversales 14 de sièges correspondantes.

Les buses d'air 28 sont alignées selon le sens longitudinal X du véhicule 10, et particulièrement sont disposées à distance les unes des autres selon le sens longitudinal X du véhicule 10.

La distance entre deux buses d'air 28 adjacentes selon le sens longitudinal X du véhicule 10 est suffisamment courte pour conduire à la création de la barrière d'air 34 et pour créer un chevauchement limité des jets d'air 30 sortant des buses d'air 28. La distance est par exemple comprise entre 20 mm et 100 mm.

La barrière d'air 34 est définie par le volume occupé par les jets d'air 30 ayant une vitesse supérieure à 1 m/s.

Les buses d'air 28 sont agencées, selon le sens d'élévation Z, entre l'assise 27 et une limite supérieure du dossier 29 des sièges 26, afin de créer la barrière d'air 34 au moins en regard de passagers assis sur les sièges 26.

En outre, les sens de sortie 32 des buses d'air 28 s'étendent chacun parallèlement à la direction principale d'étendue des rangées transversales 14, et plus particulièrement perpendiculairement au sens longitudinal X du véhicule 10 dirigeant ainsi les jets d'air 30 orientés entre les deux rangées transversales 14 de sièges.

Une telle disposition de la barrière d'air 34 entre deux rangées transversales 14 de sièges bloque les projections aériennes entre lesdites deux rangées transversales 14 et limite ainsi la propagation du contaminant parallèlement au sens longitudinal X entre un passager assis sur un des sièges 26 de l'une des rangées transversales 14 et un passager assis sur un des sièges 26 de l'autre des rangées transversales 14.

Les sens de sortie 32 des buses d'air 28 sont différents les uns des autres afin d'optimiser les dimensions de la barrière d'air 34. Avantageusement, la limite supérieure de la barrière d'air 34 est au-dessus selon le sens d'élévation Z du dossier 29 des sièges 26. La barrière d'air 34 s'étend, parallèlement au sens transversal Y du véhicule, avantageusement des buses d'air 28 jusqu'au couloir de circulation 25.

De préférence, comme illustré sur la figure 2, chaque angle entre les sens de sortie 32 d'une buse d'air 28 et d'une buse d'air 28 adjacente est identique, et est par exemple égal à 20°1 5°.

Plus particulièrement, les angles entre le sens de sortie 32 des buses d'air 28 et le plan horizontal de référence H du véhicule sont par exemple égaux à 0°, 20°, 40° et/ou 60°, ou bien 0°, 15°, 35°, 60°

Les sens de sortie 32 des buses d'air 28 se décomposent chacun en une composante verticale et une composante horizontale. La composante verticale s'étend selon le sens d'élévation Z du véhicule et la composante horizontale s'étend selon le sens transversal Y du véhicule.

Comme illustré sur la figure 2, le sens de sortie 32 de l'une des buses d'air 28 est dirigé horizontalement. L'angle entre le sens de sortie 32 de ladite buse d'air 28 et le plan horizontal de référence H du véhicule est égal à 0°. Plus particulièrement la composante verticale de ce sens de sortie 32 est nulle et la composante horizontale est orientée parallèlement au sens transversal Y du véhicule 10 en direction opposée à la fenêtre 22.

Les sens de sortie 32 des autres buses d'air 28 ont une composante orientée vers le haut du véhicule 10, plus particulièrement la composante verticale est positive et orientée vers le haut du véhicule et la composante horizontale est orientée en direction opposée à la fenêtre 22 correspondante.

De préférence, aucun des sens de sortie 32 des buses d'air 28 n'est orienté vers le bas du véhicule. Autrement dit, la composante verticale des sens de sortie 32 de toutes les buses d'air 28 est positive ou nulle.

En outre, une telle orientation des jets d'air 30 limite également la propagation des contaminants par voie aérienne entre les rangées longitudinales de sièges 26.

En effet, les jets d'air 30 orientés dirigent les flux d'air à l'intérieur du véhicule vers le couloir, au centre du véhicule, et vers le bas, en direction des pieds des passagers, ce qui limite la propagation de l'air parallèlement au sens transversal Y en partie haute du véhicule.

Les buses d'air 28 sont par exemple fabriquées par moulage par injection d'un matériau plastique, ou par e impression 3D d'un matériau plastique et, et sont de préférence en un matériau plastique recyclé.

Avantageusement, le véhicule 10 comprend également une grille de sortie 36.

La grille de sortie 36 est par exemple installée sur l'un des rebords de fenêtre 24, et plus particulièrement sur le même rebord de fenêtre 24 que les buses d'air 28.

La grille de sortie 36 et le dispositif de création d'une barrière d'air 16 forme un ensemble de limitation de la propagation de contaminant 40.

L'ensemble de limitation de la propagation de contaminant 40 est destiné à projeter le flux d'air F généré par le système d'aération et de ventilation 12 dans l'habitacle 18.

A cet effet, la grille de sortie 36 est adaptée à être traversée par au moins une partie du flux d'air F et le dispositif de création d'une barrière d'air 16 est adapté à projeter une partie du flux d'air F.

Les buses d'air 28 sont agencées à distance de la grille de sortie 36 selon le sens longitudinal X du véhicule.

Une première partie du flux d'air F généré par le système d'aération et de ventilation 12 traverse la grille de sortie 36 et est ensuite évacuée dans l'habitacle 18. Ladite première partie du flux d'air F a pour fonction l'aération, la ventilation, et éventuellement selon la température ambiante le refroidissement ou le chauffage de l'habitacle 18 au niveau des deux rangées transversales 14 de sièges correspondantes.

Une deuxième partie du flux d'air F est projetée par les buses d'air 28, de sorte à former la barrière d'air 34 tel que décrite précédemment.

La répartition du flux d'air F entre la première partie et la deuxième partie est par exemple de 80%/20% ou généralement comprise entre 90%/10% et 70%/30%.

De préférence, l'ensemble de limitation de la propagation de contaminant 40 comprend un dispositif de blocage d'air 42 qui est disposé en amont de la grille de sortie 36.

Le dispositif de blocage d'air 42 est destiné à réduire la première partie du flux d'air F généré par le système d'aération et de ventilation 12 avant de traverser la grille de sortie 36 et pour augmenter la deuxième partie du flux d'air projetée par les buses d'air 28.

Comme illustré sur la figure 2, le dispositif de blocage d'air 42 est par exemple disposé au niveau du rebord de fenêtre 24 en dessous de la grille de sortie 36 et des buses d'air 28 selon le sens d'élévation Z du véhicule.

Le dispositif de blocage d'air 42 est par exemple une grille perforée ou un filtre de catégorie ISO coarse à ISO ePM 10 selon la norme ISO 16890 du 1 Mai 2017.

Dans le mode de réalisation de l'invention où le dispositif de blocage d'air 42 est un filtre, le dispositif de blocage 42 permet, en outre, une filtration efficace de l'air, et élimine par exemple entre 15% et 90% des particules de 3 µm de diamètre tel que les virus par exemple

Un tel ensemble de limitation de la propagation de contaminant 40 selon l'invention permet une limitation de la propagation de contaminant entre les passagers.

Plus particulièrement, la projection des jets d'air 30 orientés par les buses d'air 28 limite la propagation de contaminant à la fois parallèlement au sens longitudinal X du véhicule 10 par la formation d'une barrière d'air 34.

En outre, la filtration supplémentaire du flux d'air F par dispositif de blocage d'air 42 permet de limiter la teneur en contaminant de l'air présent dans l'habitacle 18.

Par exemple, dans le cas d'un groupe de quatre passagers assis dans un agencement « en carré » de sièges 26 et émettant un contaminant, tel qu'un virus, l'exposition au contaminant des passagers situés dans les rangées transversales 14 de sièges situées devant ou derrière le « carré » est réduite d'un facteur de deux si des ensembles de limitation de la propagation de contaminant 40 sont agencés devant et derrière les rangées transversales 14 du « carré » par rapport à un véhicule ne comprenant pas d'ensemble de limitation de la propagation de contaminant 40 selon l'invention.

En outre, grâce à son fonctionnement passif utilisant exclusivement le flux d'air F généré par le système d'aération et de ventilation 12, un tel ensemble de limitation de la propagation de contaminant 40 est économique et ne consomme pas d'énergie supplémentaire.

D'une manière générale, le véhicule 10 peut comprendre un dispositif de création d'une barrière d'air supplémentaire qui est symétrique à l'un des dispositifs de création d'une barrière d'air 16 précédemment décrits selon un plan longitudinal du véhicule perpendiculaire au sens Y. Ce dispositif de création d'une barrière d'air supplémentaire est disposé en face du dispositif de création d'une barrière d'air 16 précédemment décrit et adapté pour créer une barrière d'air 34 symétrique à celle crée par ce dispositif de création d'une barrière d'air 16.

Ainsi, les barrières d'air 34 sont dirigées l'une vers l'autre et se rencontrent au niveau du couloir 25 où les contaminant peuvent être évacués facilement.

Dans un deuxième mode de réalisation de l'invention, non-illustré, les buses d'air 28 sont montées sur la grille de sortie 36, par exemple par encliquetage. Ce deuxième mode de réalisation diffère du mode de réalisation précédemment décrit uniquement en ce que les buses d'air 28 ne sont pas à distance de la grille de sortie 36, mais montées directement sur la grille de sortie 36.

Dans ce deuxième mode de réalisation, la totalité du flux d'air F généré par le système d'aération et de ventilation 12 traverse la grille de sortie 36 et est divisée ensuite en une première partie qui est évacuée dans l'habitacle 18 sans passer par les buses d'air 28 et une deuxième partie qui est projetée par les buses d'air 28.

Dans ce deuxième mode de réalisation, les buses d'air 28 sont avantageusement montées mobiles en translation sur la grille de sortie 36 parallèlement au sens longitudinal X du véhicule. Une telle mobilité des buses d'air 28 autorise un positionnement des buses d'air 28 parallèlement au sens longitudinal X du véhicule lors de l'installation, garantissant ainsi un positionnement satisfaisant des buses d'air 28 entre deux rangées transversales 14 de sièges. Cette mobilité peut être une mobilité blocable par moyens de blocage, s'opposant à la mobilité en translation, tel que des vis ou des goupilles. La mobilité peut être une mobilité par glissières.

Dans un troisième mode de réalisation de l'invention, non-illustré, l'ensemble de limitation de la propagation de contaminant 40 est installé dans un véhicule préexistant, communément appelé en « retrofit ».

Ce troisième mode de réalisation diffère des modes de réalisation décrits précédemment uniquement en ce que le système d'aération et de ventilation 12 comprend une grille d'évacuation existante agencée sur la paroi latérale 20, et plus particulièrement sur l'un des rebords de fenêtre 24. Dans ce cas-là, l'ensemble de limitation de la propagation de contaminant 40 est fixé sur ladite grille d'évacuation. Par exemple, la grille de sortie 36 est encliquetée directement sur la grille d'évacuation déjà existante.

Selon une variante non représentée, les buses d'air 28 sont disposées au niveau de grilles de sortie agencées sur un rebord de fenêtre situé à une limité supérieure de la fenêtre 22.

Selon une variante non représentée, les buses d'air 28 sont disposées au niveau de grilles de sortie agencées sur le plafond du véhicule.

Selon une variante non représentée, le véhicule 10 de transport de passagers comprend deux rangées longitudinales de sièges s'étendant une direction principale parallèle au sens longitudinal X du véhicule 10. Chaque rangée s'étend le long d'une paroi latérale 20 respective. Plus particulièrement, les deux rangées longitudinales se font face l'une de l'autre et sont directement adjacentes, c'est-à-dire qu'aucune autre rangée de siège est disposée entre les deux rangées longitudinales. Des buses d'air 28 sont disposées au niveau de grilles de sortie agencées sur le plafond du véhicule. Les jets d'air 30 orientés forment ensemble une barrière d'air 34 s'étendant entre deux rangées longitudinales de sièges. Plus particulièrement, la barrière d'air 34 s'étend entre les deux rangées longitudinales.

## Revendications

1. Véhicule (10) de transport de passagers, notamment véhicule ferroviaire, comprenant :
- un système d'aération et de ventilation (12) adapté à générer un flux d'air (F) ;
- deux rangées de sièges, chaque rangée s'étendant selon une direction principale ; et
- un dispositif de création d'une barrière d'air (16) afin de limiter la propagation de contaminant entre les passagers du véhicule (10),
le dispositif de création d'une barrière d'air (16) comprenant au moins deux buses d'air (28), chaque buse d'air (28) étant adaptée pour projeter une partie du flux d'air (F) généré par le système d'aération et de ventilation (12) en un jet d'air orienté (30) selon un sens de sortie (32) de ladite buse d'air (28), les sens de sortie (32) des buses d'air (28) étant différents les uns des autres,
les jets d'air orientés (30) formant ensemble une barrière d'air (34) s'étendant entre les deux rangées de sièges, et
les sens de sortie des buses d'air s'étendant chacun parallèlement à la direction principale, **caractérisé en ce que** le sens de sortie (32) de chaque buse d'air (28) a une composante orientée vers le haut du véhicule (10) et/ou le sens de sortie (32) de l'une des buses d'air (28) est dirigé horizontalement.

2. Véhicule (10) selon la revendication 1, comprenant deux rangées transversales (14) de sièges agencées l'une derrière l'autre selon un sens longitudinal (X) du véhicule (10), les jets d'air orientés (30) formant ensemble une barrière d'air (34) s'étendant entre les deux rangées de sièges, les sens de sortie des buses d'air s'étendent chacun perpendiculairement au sens longitudinal (X) du véhicule.

3. Véhicule (10) selon l'une quelconque des revendications précédentes, dans lequel le dispositif de création d'une barrière d'air (16) comprend plus que deux buses d'air (28), en particulier quatre buses d'air (28), et dans lequel chaque angle entre les sens de sortie (32) d'une buse d'air (28) et d'une buse d'air adjacente (28) est identique.

4. Véhicule (10) selon l'une des revendications précédentes, dans lequel le véhicule (10) comprend une grille de sortie (36), la grille de sortie (36) et le dispositif de création d'une barrière d'air (16) formant un ensemble de limitation de la propagation de contaminant (40), la grille de sortie (36) étant adaptée à être traversée par au moins une partie du flux d'air (F) et le dispositif de création d'une barrière d'air (16) étant adapté à projeter une partie du flux d'air (F).

5. Véhicule (10) selon la revendication 4, dans lequel l'ensemble de limitation de la propagation de contaminant (40) comprend un dispositif de blocage d'air (42) qui est disposé en amont des buses d'air (28) et de la grille de sortie (36), le dispositif de blocage d'air (42) étant destiné à réduire l'au moins une partie du flux d'air (F) destiné à traverser la grille de sortie (36) et à augmenter l'au moins une partie du flux d'air (F) destiné à être projeté par le dispositif de création d'une barrière d'air (16).

6. Véhicule (10) selon la revendication 4 ou 5, dans lequel les buses d'air (28) sont agencées à distance de la grille de sortie (36) selon le sens longitudinal (X) du véhicule (10).

7. Véhicule (10) selon la revendication 4 ou 5, dans lequel les buses d'air (28) sont montées sur la grille de sortie (36).

8. Véhicule (10) selon la revendication 7, dans lequel les buses d'air (28) sont montées mobiles en translation sur la grille de sortie (36) parallèlement au sens longitudinal (X) du véhicule (10).

9. Véhicule (10) selon l'une quelconque des revendications 4 à 8, dans lequel le véhicule (10) comprend une paroi latérale (20) s'étendant selon le sens longitudinal (X) du véhicule (10) et sur laquelle est agencée une grille d'évacuation du système d'aération et de ventilation (12), l'ensemble de limitation de la propagation de contaminant (40) étant fixé sur la grille d'évacuation.
